# EUROPÄISCHE PATENTANMELDUNG

(11) **EP 2 851 666 A1**
(43) Veröffentlichungstag der Anmeldung: **25.03.2015**
(21) Anmeldenummer: 13185695.7
(22) Anmeldetag: 24.09.2013
(51) Int. Cl.: G01K 17/06, G06Q 50/06

(54) **Verfahren und Vorrichtung zur Ermittlung des Energienutzungsgrades einer energetischen Anlage**

(71) Anmelder: energicos Systems LLP, 10587 Berlin (DE)
(72) Erfinder: Donath, Martin, 18211 Ostseebad Nienhagen (DE)
(74) Vertreter: Gulde & Partner

(57) **Zusammenfassung**

Die Erfindung betrifft ein Verfahren und ein Vorrichtung zur Ermittlung eines auf einen definierten Zeitraum bezogenen Energienutzungsgrades einer energetischen Anlage innerhalb eines Teilzeitraumes des definierten Zeitraumes.

Das Verfahren ist gekennzeichnet durch: Ermitteln (S1) eines mittleren Wertes pro Zeiteinheit mindestens einer Größe, von der eine aktuell aufgewendete Endenergiemenge ermittelbar ist, und eines zugeordneten Wertes pro Zeiteinheit einer weiteren Größe, die abhängig von einer Konstellation und einem aktuellen Betriebsverhalten der Anlage ist, wobei mittels des Wertes der weiteren Größe eine an einem Übergabepunkt verfügbargemachte Nutzenergiemenge ermittelbar ist; temporäres Manipulieren der Anlage, so dass die Anlage unter Verwendung von anderen Mengen von Endenergie betrieben wird, wobei von den anderen Mengen mindestens eine größer und mindestens eine kleiner als die aktuell aufgewendete Endenergiemenge ist, und Ermitteln (S2, S3) jeweils zugehöriger Werte der weiteren Größe der manipulierten Anlage, Zuordnung der Werte der weiteren Größe der manipulierten Anlage zu anderen Werten der mindestens einen Größe, und Ermitteln (S5) der für den definierten Zeitraum zu verbrauchenden Endenergieteilmengen und daraus zu erzeugenden Nutzenergieteilmengen durch Inter- oder Extrapolation.

## Beschreibung

Die Erfindung betrifft ein Verfahren und eine Vorrichtung zur Ermittlung des Energienutzungsgrades einer energetischen Anlage

### Hintergrund

Zur Gewährleistung einer nutzergerechten Energieversorgung eines Gebäudes wie die Sicherung einer zweckdienlichen Innentemperatur und die Bereitstellung von Warmwasser oder für andere Zwecke werden energetische Anlagen eingesetzt. Beispiele solcher Anlagen sind Heizanlagen für Raumheizung und Trinkwassererwärmung, die Brennstoff und/oder elektrische Energie thermisch umsetzen und dann an einem Übergabepunkt Nutzenergie zur Verfügung stellen, etwa Öl- und Gasheizungen oder Wärmepumpen, sowie Wärmeübergabeanlagen, die beispielsweise von einem Fernwärmeanbieter Nutzenergiemengen am Übergabepunkt abgeben. Auch Kühlanlagen oder kombinierte Heiz- und Kühlsysteme können als energetische Anlagen bezeichnet werden.

Einige Eigenversorgungsanlagen regeln die pro Zeiteinheit verbrauchte Endenergiemenge abhängig von einem Messwert, beispielsweise der Außentemperatur. Unabhängig davon ist die pro Zeiteinheit verbrauchte Endenergiemenge jeder geregelten Anlage von der Außentemperatur beeinflusst.

Zur Vergleichbarkeit der Kosten bei einer Umstellung von Eigenversorgung auf gewerbliche Wärmelieferung für Mietwohnraum ist gemäß der zugehörigen Wärmelieferverordnung, (WärmeLV 2013) von Bedeutung, die durch die Eigenversorgung am Übergabepunkt zur Verfügung gestellte Wärmemenge, also die Nutzenergiemenge, zu ermitteln. Die Kosten der Zurverfügungstellung dieser Wärmemenge mittels Eigenversorgung können dann mit den Kosten für den Erwerb dieser Wärmemenge von einem gewerblichen Wärmelieferanten verglichen werden.

Die Nutzenergiemenge ist bestimmt von der eingesetzten lastabhängigen Endenergiemenge und dem Nutzungsgrad der Eigenversorgungsanlage, der seinerseits durch die Konfiguration der Anlage und ihrem lastabhängigen Betriebsverhalten bestimmt ist. Auf Grund dieser Abhängigkeit von der Endenergiemenge wird der Nutzungsgrad auf unterschiedliche Zeiträume bezogen. Damit ist der Nutzungsgrad als Verhältnis zwischen im Zeitraum zur Verfügung gestellter Wärmemenge als Nutzenergie zu der im Zeitraum eingesetzten Endenergiemenge definiert, beispielsweise als Jahresnutzungsgrad.

Gemäß §§ 10 der WärmeLV ist für die Ermittlung der in Eigenversorgung zur Verfügung gestellten Wärmemenge der Jahresnutzungsgrad zu berücksichtigen.

Für das Beispiel einer Gebäudeheizungsanlage mit brennstoffbefeuertem Wärmeerzeuger ist der Jahresnutzungsgrad das Verhältnis von im Bezugsjahr zugeführter Nutzenenergie für Raumheizung und Trinkwassererwärmung zu im Bezugsjahr aufgewendeter End- bzw. Brennstoffenergie.

Dabei ist die aufgewendete Nutzenergie für Trinkwassererwärmung von der Außentemperatur weitgehend unbeeinflusst, die aufgewendete Energie für Raumheizung wird hingegen von der Außentemperatur beeinflusst.

Durch eine Kurzzeitmessung, z.B. 24 h kann der Wert für die Nutzenergie für die Trinkwassererwärmung ermittelt und in Abhängigkeit von der Nutzungsform auf das Jahr extrapoliert werden. Wohngebäude unterliegen dabei z.B. einem Tageszyklus, öffentliche Gebäude z.B. einem Wochenzyklus. Der Wert der erforderlichen Nutzenergie für die Raumheizung kann beispielsweise in einer Kurzzeitmessung in Abhängigkeit von der Außentemperatur ermittelt werden.

Der Nutzungsgrad ist also funktionell abhängig von dem Gebäude, den verwendeten Anlagenbauteilen und ihrer Konfiguration, der Witterung und dem Nutzerverhalten.

Ist der Jahresnutzungsgrad nicht anhand im letzten Abrechnungszeitraum mittels Wärmemengenzählern fortlaufend gemessener Wärmemengen bestimmbar, so ist er gemäß §10, Absatz 2, der WärmeLV wenn möglich durch eine Kurzzeitmessung zu ermitteln.

In der Begründung der Verordnung wird das Bestehen hinreichend genauer Regeln der Technik zur Ermittlung eines Jahresnutzungsgrades aus Kurzzeitmessungen als nicht gesichert bezeichnet und es wird dargelegt, dass Regelwerke zur belastbaren Ermittlung eines Jahresnutzungsgrades auf dem Wege einer Kurzzeitmessung noch Gegenstand der Diskussion sind.

### Zusammenfassung der Erfindung

Ein Grund für die andauernde Diskussion über eine belastbare Ermittlung eines Jahresnutzungsgrades auf dem Wege einer Kurzzeitmessung ist die Abhängigkeit der berechneten Endenergie- und Nutzenergiemenge von den Messwerten und der Berechnungsmethode einer Kurzzeitmessung, da sich je nach Lastanforderung unterschiedliche Nutzungsgrade bei der Kurzzeitmessung ergeben.

Die Weiterentwicklung der Technik der Beheizung und Kühlung von Gebäuden sowie der Trinkwassererwärmung, die Erfahrungswerte aus der Anwendung und der Erlass der Verordnung über die Umstellung auf gewerbliche Wärmelieferung für Mietwohnraum (WärmeLV) machen es erstrebenswert, ein Verfahren anzugeben, mit dem sich mittels Kurzzeitmessungen ein Jahresnutzungsgrad einer energetischen Anlage, beispielsweise einer Heizanlage bzw. Kühlanlage oder eines kombinierten Systems, mit hinreichender Genauigkeit ermitteln lässt.

Es besteht also Bedarf nach einem Verfahren, dass es ermöglicht, einen auf einen vorgegebenen Zeitraum bezogenen Energienutzungsgrad einer energetischen Anlage eines Gebäudes mittels Messungen in einem kürzeren Zeitraum zu ermittelten.

Zur Lösung dieser Aufgabe schlägt die vorliegende Erfindung ein Verfahren nach Anspruch 1 und eine Vorrichtung nach Anspruch 8 vor.

Das vorgeschlagene Verfahren dient zur Ermittlung eines Energienutzungsgrades einer energetischen Anlage eines Gebäudes, wobei das Verfahren den Energienutzungsgrad für einen definierten Zeitraum ermittelt und folgenden Schritt umfasst:
Ermitteln des Energienutzungsgrades als Verhältnis einer Summe von Nutzenergieteilmengen zu einer Gesamtendenergiemenge des Zeitraums.

Das Verfahren ist dadurch gekennzeichnet, dass zumindest die Nutzenergieteilmengen ermittelt werden durch: Ermitteln eines mittleren Wertes pro Zeiteinheit mindestens einer Größe, wobei mittels des Wertes eine aktuell aufgewendete Endenergiemenge ermittelbar ist, und eines zugeordneten Wertes pro Zeiteinheit einer weiteren Größe, die abhängig von einer Konstellation und einem aktuellen Betriebsverhalten der Anlage ist, wobei mittels des zugeordneten Wertes eine an einem Übergabepunkt verfügbargemachte Nutzenergiemenge ermittelbar ist; temporäres Manipulieren der Anlage, so dass die Anlage unter Verwendung von anderen Mengen von Endenergie betrieben wird, wobei von den anderen Mengen mindestens eine größer und mindestens eine kleiner als die aktuell aufgewendete Endenergiemenge ist, und Ermitteln zumindest jeweils zugehöriger Werte pro Zeiteinheit der weiteren Größe der manipulierten Anlage, Zuordnung der Werte der weiteren Größe der manipulierten Anlage zu weiteren Werten der mindestens einen Größe, und Ermitteln der Nutzenergieteilmengen entsprechend vorbestimmter Werte der mindestens einen Größe für die Teilzeiträume durch Inter- oder Extrapolation der ermittelten Werte von Endenergie und Nutzenergie.

Für die Ermittlung des Energienutzungsgrades ist es hinreichend, zu wissen, welche Nutzenergiemengen bei drei unterschiedlichen Endenergiemengen am Übergabepunkt verfügbar gemacht werden. Der funktionale Zusammenhang zwischen Nutzenergie und Endenergie und damit der Nutzungsgrad lassen sich durch Inter- und Extrapolation ermitteln. Die temporäre Manipulation der Anlage ermöglicht den dafür erforderlichen Betrieb der Anlage unter Verwendung von anderen, unterschiedlichen Mengen von Endenergie. Durch die Berücksichtigung einer aktuell aufgewendeten Endenergiemenge und das Ermitteln der Nutzenergieteilmengen entsprechend manipulierter Werte der mindestens einen Einflussgröße wird die Ermittlung belastbar.

Vorteilhafte Ausführungsformen des Verfahrens und der Vorrichtung sind in den abhängigen Ansprüchen angegeben.

In einer Ausführungsform des Verfahrens wird die Lastanforderung durch die Manipulation des Wertes der Außentemperatur verändert. Die Veränderung dieses Parameters ermöglicht eine Ermittlung des funktionalen Zusammenhangs zwischen Nutzenergiemenge und Endenergiemenge.

Die Gesamtendenergiemenge kann eine Summe von Endenergieteilmengen sein. Die Endenergieteilmengen können entsprechend den vorbestimmten Werten der mindestens einen Größe ermittelt sein.

Die mindestens eine Größe kann eine Außentemperatur sein und die anderen Werte der mindestens einen Größe können eine Temperaturuntergrenze und eine Temperaturobergrenze der Anlage sein. Dann kann die Anlage eine Außentemperaturmessvorrichtung enthalten und die Lastanforderung abhängig von einem gemessenen Außentemperaturwert regeln. Die Manipulation der Anlage kann die Außentemperaturmessvorrichtung, einen gemessenen Außentemperaturwert und/oder eine Regelungsantwort auf den gemessenen Außentemperaturwert betreffen.

Die mindestens eine Größe kann eine Last sein und die vorbestimmten Werte können Lastzustände sein, zu deren Ermittlung Daten von mindestens einer der folgenden Größen verwendet werden: Raumvolumina, Sollinnentemperaturwerte, Lagen und Nutzungsformen von Räumen des Gebäudes, Gebäudestandort, Außentemperatur, Solareinstrahlung, Windgeschwindigkeit, Luftfeuchte und Niederschlagsmenge.

Dabei können die Werte der weiteren Größe zumindest für die manipulierte Anlage in einem anderen Zeitraum ermittelt worden sein, der kürzer als der Zeitraum der Kurzzeitmessung ist. Beispielsweise ist der Zeitraum ein Jahr, die Teilzeiträume sind jeweils ein Tag und der andere Zeitraum ist eine Stunde.

Die Erfindung wird nachfolgend in Ausführungsbeispielen anhand der zugehörigen Zeichnungen erläutert. Es zeigen:
- Figur 1: einen beispielhaften Energiefluss einer Gebäudebeizung in Eigenversorgung;
- Figur 2: beispielhafte Installationspunkte für Zähl- oder Messvorrichtungen zur Ermittlung der am Übergabepunkt zur Verfügung gestellten Nutzenergie;
- Figur 3: beispielhaft die Abhängigkeit der Verluste bzw. des Nutzungsgrades von dem Endenergieverbrauch pro Zeiteinheit (Last);
- Figur 4: ein Flussdiagramm eines Verfahrens zur Ermittlung eines Jahresnutzungsgrades eines Gebäudes;
- Figur 5: ein Flussdiagramm eines Ausführungsbeispiels des erfindungsgemäßen Verfahrens; und
- Figur 6: beispielhafte Verläufe über das Jahr von auf den Tag bezogenen End-, Verlust-, und Nutzenergiemengen aus denen der auf den Tag bezogene Energienutzungsgrad ermittelt werden kann. Dabei sind die Verluste eine Funktion der Anlagenkonfiguration, des Nutzerverhaltens und des Wetters.

Für die Wärmeerzeugung werden inzwischen vermehrt neben Heizkesseln auch BHKW, Wärmepumpen, Elektroenergie usw. oder auch hybride Systeme eingesetzt. Zunehmend werden neben Fernwärmesystemen auch kleine Wärmenetze eingesetzt, bei den Wärmeverteilungssystemen sind neben den Medien wie Wasser oder Luft, auch integrierte Bauteile, Speicherung über Kurzzeit- oder Langzeitpuffer usw. zu berücksichtigen. Die Wärmeübergabe erfolgt zunehmend kombiniert über Konvektoren, Flächenheizungen, Luft usw. mit Wärmerückgewinnungssystemen.

Idealerweise erfolgt die Ermittlung des Jahresnutzungsgrades über in dem Gebäude installierte Zähler für die verbrauchte Endenergie, die verbrauchte Wärmemenge für Trinkwassererwärmung und die verbrauchte Wärmemenge für Raumheizung. Die in das Gebäude für Beleuchtung, den Betrieb elektrischer Geräte, Hilfsenergie für die Heizanlage usw. eingetragene Elektroenergie wird dabei vorwiegend in Wärme für die Raumheizung umgewandelt. Je nach Definition des Übergabepunktes ist diese Energieform in die Berechnung einzubeziehen.

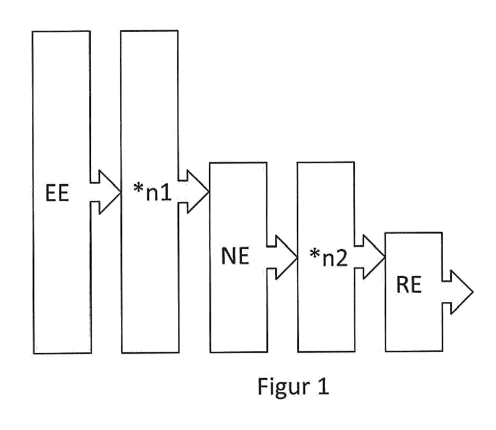

Der Nutzungsgrad als Funktion des Gebäudes, der verwendeten Bauteile und ihrer Konfiguration, der Witterung und des Nutzerverhaltens ist am in Figur 1 beispielhaft gezeigten Energieflussbild eines beheizten Gebäudes erkennbar. Endenergie EE in Form von solarthermischer Energie, Wärmeenergie, Brennstoff und/oder elektrischer Energie wird zur Wärmeerzeugung und/oder Wärmeübertragung verwendet, dabei bewirkt ein Nutzungsgrad n1, dass eine Nutzenergie NE=EE*n1 an einem Übergabepunkt des Gebäudes zur Verfügung gestellt wird. Ein weiterer Nutzungsgrad n2 bewirkt, dass eine Energie RE=NE*n2=EE*n1*n2 als Wärme in Räumen des Gebäudes tatsächlich nutzbar ist.

Der Nutzungsgrad n1 wird durch Verluste und Gewinne in der Wärmeerzeugung und/oder Wärmeübertragung bestimmt. Verluste treten beispielsweise in Heizkesseln von Gas- oder Ölheizungen und in der Übertragung bis zum Übergabepunkt auf, Gewinne können etwa von Sonneneinstrahlung in den Aufstellraum, solarthermisch oder mittels Wärmepumpe gewonnener Wärme oder von Abwärme elektrischer Verbraucher im Aufstellraum herrühren. Insbesondere die Verluste der Übertragung bis zum Übergabepunkt sind dabei durch die Konfiguration der Anlage und die eingesetzte Endenergiemenge bestimmt, die ihrerseits von den herrschenden Witterungsbedingungen und den durch die Gebäudestruktur bestimmten Wärmeanforderungen auf Grund der Gebäudenutzung bestimmt ist. Bei BHKW wird ein Teil der eingesetzten Endenergiemenge in elektrische Energie umgewandelt.

Der weitere Nutzungsgrad n2 wird durch Verluste und Gewinne in der Wärmeverteilung vom Übergabepunkt in die Räume des Gebäudes und Verluste und Gewinne der Trinkwassererwärmung bestimmt. Verluste treten beispielsweise durch Überheizung, Heizwärmeverteilung und Warmwasserverteilung auf, Gewinne können etwa durch Solareinstrahlungen herrühren. Liegt der Übergabepunkt in Räumen des Gebäudes, beispielsweise am Heizkörper, so kann der weitere Nutzungsgrad n2 als gleich Eins angenommen werden.

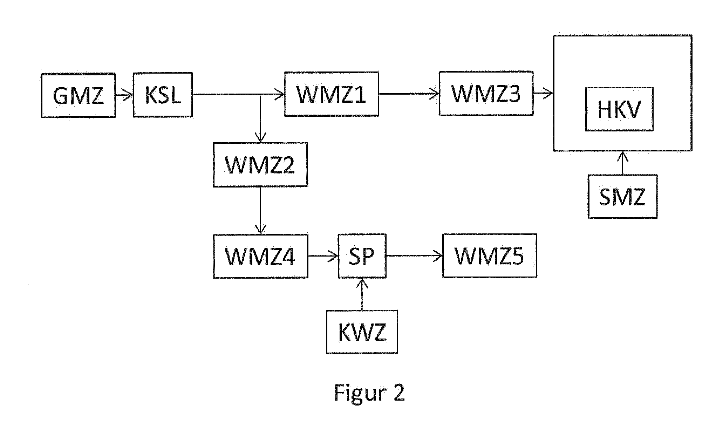

Die am Übergabepunkt zur Verfügung gestellte Nutzenergie kann am einfachsten durch Wärmemengenzähler am Übergabepunkt ermittelt werden. Fehlt ein solcher Wärmemengenzähler am Übergabepunkt, so kann die Nutzenergie mittels an anderen Punkten installierten Zähl- oder Messvorrichtungen ermittelt werden. Figur 2 zeigt beispielhafte Installationspunkte für solche Zähl- oder Messvorrichtungen.

Beispielsweise erfasst ein erster Wärmemengenzähler WMZ1 einen Teil einer durch einen Kessel KSL erzeugten Wärmemenge, die für die Raumheizung verwendet wird. Ein zweiter Wärmemengenzähler WMZ2 erfasst einen Rest der durch den Kessel KSL erzeugten Wärmemenge, die für die Trinkwassererwärmung verwendet wird, Ein dritter Wärmemengenzähler WMZ3 erfasst die an den Raum verteilte Wärmemenge, ein vierter Wärmemengenzähler WMZ4 erfasst die einem Speicher SP zugeführte Wärmemenge und ein Kaltwasserzähler die Menge an Kaltwasser, die dem Speicher SP zugeführt wird. Ein fünfter Wärmemengenzähler WMZ5 erfasst die tatsächlich durch Warmwasserentnahme verbrauchte Wärmemenge. In den Räumen können Heizkostenverteiler HKV sein. Ein Strommengenzähler SMZ kann die Wärmemenge bestimmbar machen, die als Abwärme in den Räumen bei der Umwandlung elektrischer Energie entsteht.

Die eingesetzte Endenergiemenge lässt sich beispielsweise mit einem Gasmengenzähler GMZ und/oder einem Stromzähler erfassen.

Verluste, die bei der Wärmeerzeugung im Kessel KSL auftreten, können dann beispielsweise anhand einer Differenz zwischen der mittels des Gasmengenzählers GMZ ermittelten Endenergiemenge und der Summe der von dem ersten und zweiten Wärmemengenzählern WMZ1, WMZ2 gezählten Wärmemengen ermittelt werden. Analog kann der Nutzungsgrad des Kessels als Verhältnis dieser beiden Mengen ermittelt werden.

Verluste, die durch Wärmeabgabe an die Raumluft eines Heizungsraums und/oder über außenliegende Leitungen an die Außenluft bedingt sind, können beispielsweise anhand einer Differenz zwischen der vom ersten Wärmemengenzähler WMZ1 gezählten Wärmemenge und der von dem dritten Wärmemengenzähler WMZ3 gezählten Wärmemengen ermittelt werden.

Verluste, die in der Verteilung bis zum Speicher SP auftreten, können beispielsweise anhand einer Differenz zwischen der vom zweiten Wärmemengenzählers WMZ2 gezählten Wärmemenge und der vom vierten Wärmemengenzähler WMZ4 gezählten Wärmemenge ermittelt werden.

Verluste, die durch die Verteilung über innenliegende Leitungen auftreten, können anhand einer Differenz zwischen der vom dritten Wärmemengenzähler WMZ3 gezählten Wärmemenge und den erfassten Daten der Heizkostenverteiler HKV ermittelt werden, wobei die erfassten Daten vor der Differenzbildung entsprechend einer von der Verlegung abhängigen Funktion gewichtet werden.

Verluste, die durch Warmwasserzirkulation und -bereithaltung im Speicher SP entstehen, können anhand einer Differenz zwischen der vom vierten

Wärmemengenzähler WMZ4 gezählten Wärmemenge und der vom fünften Wärmemengenzähler WMZ5 gezählten Wärmemenge ermittelt werden.

Grundsätzlich ist der Nutzungsgrad von den verwendeten Bauteilen und von der jeweiligen Einregelung und dem Wartungszustand der Anlage abhängig. Dabei verändert sich der Nutzungsgrad in Abhängigkeit von der Außentemperatur bzw. der Last und dem Nutzungszustand. Bei Gebäudeheizungsanlagen besteht eine Korrelation des Nutzungsgrades zu dem Verhältnis zum Nutzenergieverbrauch von Raumbeheizung und Trinkwassererwärmung.

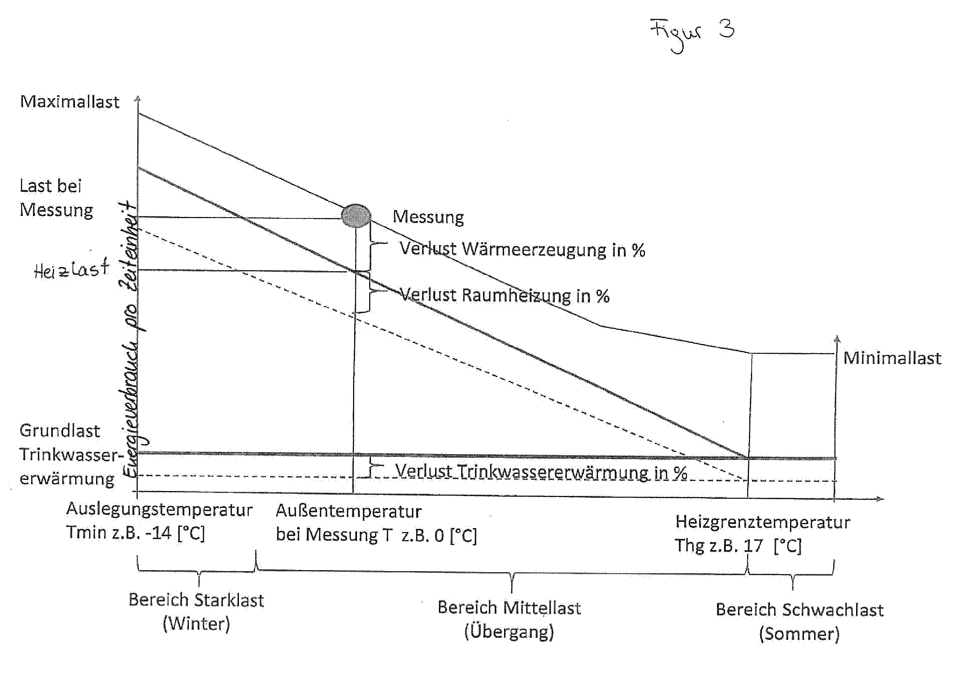

In Figur 3 sind beispielhaft und schematisch eine an einem Übergabepunkt verfügbargemachte Wärmemenge und die dafür eingesetzte Endenergie in Abhängigkeit von der Außentemperatur für eine Öl- oder Gasheizung aufgetragen. Die verfügbargemachte Wärmemenge setzt sich zusammen aus einer über oder für das Trinkwasser verfügbargemachten Wärmemenge und einer über oder für die Raumheizung verfügbargemachten Wärmemenge.

In der Figur sind eine Temperaturuntergrenze, die Auslegungstemperatur, und eine Temperaturobergrenze, die Heizgrenztemperatur, gezeigt. Die Temperaturuntergrenze ist die größtmögliche Differenz zwischen Außentemperatur und einer Sollinnentemperatur, bei der die Heizleistung des Kessels KSL noch zur Beheizung des Gebäudes ausreicht. Oberhalb der Temperaturobergrenze wird der Kessel von der Temperaturdifferenz im Wesentlichen unbeeinflusst lediglich zur Warmwasserbereitung verwendet.

Bei Temperaturdifferenzen zwischen der Temperaturuntergrenze und der Temperaturobergrenze verändert sich in Abhängigkeit von der Außentemperatur und Anlagenkonfiguration die am Übergabepunkt pro Zeiteinheit verfügbargemachte Wärmeenergiemenge NE, die Nutzenergiemenge, und, die Verlustwärmemenge VE=EE-NE mit der pro Zeiteinheit eingesetzten bzw. verbrauchten Endenergiemenge EE, so dass sich der auf die Zeiteinheit bezogene mittlere Wirkungsgrad n1=NE/EE in Abhängigkeit von der Anlagenkonfiguration und dem Last verändert. Bei der Darstellung in der Figur 3 sinkt der Wirkungsgrad mit zunehmender Außentemperatur.

Der jeweilige Zusammenhang zwischen Endenergiemenge und Nutzenergiemenge, Verlustwärmemenge oder Wirkungsgrad lässt sich auf der Basis einer vorangegangen Analyse des Anlagenverhaltens gut inter- bzw. extrapolieren. Dies wird im Rahmen der Erfindung genutzt. Statt des Zusammenhangs mit der Endenergiemenge kann auch der Zusammenhang mit einer Messgröße, durch die die eingesetzte Endenergiemenge ermittelbar ist, inter- bzw. extrapoliert werden.

Zur Stützung der Inter- bzw. Extrapolation, sind die jeweiligen Nutzenergiemengen für mindestens drei unterschiedliche Endenergiemengen zu ermitteln. Eine dieser Ermittlungen kann an einer laufenden Anlage ohne Manipulation für die aktuell pro Zeiteinheit verbrauchte Endenergiemenge erfolgen.

Zur Ermöglichung der mindestens zwei weiteren Ermittlungen bei unterschiedlichen Endenergiemengen wird eine Manipulation der Anlage dahingehend vorgeschlagen, dass diese unter den augenblicklichen Rahmenbedingungen mindestens zwei unterschiedliche weitere Endenergiemengen je Zeiteinheit verbraucht.

Dies kann zum Beispiel eine Manipulation sein, die bewirkt, dass eine größere und eine kleinere Endenergiemenge je Zeiteinheit verbraucht werden, die größer bzw. kleiner als die aktuell pro Zeiteinheit verbrauchte Endenergiemenge sind.

Dies kann zum Beispiel insbesondere eine Manipulation sein, die bewirkt, dass eine maximale und eine minimale Endenergiemenge je Zeiteinheit verbraucht werden.

Die Manipulation kann zum Beispiel eine Last betreffen, da mit höherer oder geringer Last, beispielsweise entsprechend der Last im Winter und im Sommer, auch höherer oder geringerer Verbrauch von Endenergie einhergeht. Bei Anlagen, bei denen die verbrauchte Endenergiemenge von einer gemessenen Außentemperatur abhängt, kann beispielsweise die Umgebungsluft eines Außentemperaturfühlers auf einen definierten Wert beheizt oder gekühlt werden, so dass die Temperaturobergrenze, entsprechend einer minimalen Endenergiemenge, oder die Temperaturuntergrenze, entsprechend einer maximalen Endenergiemenge, herrscht. Alternativ kann die Regelung direkt manipuliert werden, beispielsweise kann der vom Temperaturfühler ermittelte Messwert oder die Regelungsantwort auf den ermittelten Messwert manipuliert werden.

Um den Energienutzungsgrad der Anlage für einen Zeitraum, also beispielsweise den Jahresnutzungsgrad, zu bestimmen, kann der Zeitraum in nicht überlappende Teilzeiträume, beispielsweise Wochen, Tage oder Stunden, zerlegt werden und es können anhand der ermittelten Nutzenergiemengen Nutzenergieteilmengen für die Teilzeiträume durch Inter- oder Extrapolation ermittelt werden. Wohngebäude unterliegen z.B. einem Tageszyklus, öffentliche Gebäude z.B. einem Tages- und Wochenzyklus.

Sind Endenergieteilmengen, die in den einzelnen Teilzeiträumen verbraucht wurden, bekannt, so können den mithilfe der Manipulation ermittelten Nutzenergiemengen Endenergiemengen zugeordnet und die Nutzenergieteilmengen für die Teilzeiträume durch Inter- oder Extrapolation anhand der Endenergieteilmengen ermittelt werden.

Sind Endenergieteilmengen, die in den einzelnen Teilzeiträumen verbraucht wurden, nicht bekannt, so können den mithilfe der Manipulation ermittelten Nutzenergiemengen Temperaturdifferenzen oder Lasten zugeordnet und die Nutzenergieteilmengen für die Teilzeiträume durch Inter- oder Extrapolation anhand von Durchschnitts- oder Maximaltemperaturdifferenzen bzw. -lasten in den Teilzeiträumen ermittelt werden.

Eine zur Ermittlung des Energienutzungsgrad für einen Zeitraum notwendige Gesamtendenergiemenge kann, sofern nicht bekannt, als Summe von Endenergieteilmengen ermittelt werden, die ihrerseits anhand der Durchschnitts- oder Maximaltemperaturdifferenzen bzw. -lasten mittels Inter- oder Extrapolation ermittelt werden können.

Durchschnitts- oder Maximaltemperaturdifferenzen können zu Sollinnentemperaturen ermittelt werden, die für die Teilzeiträume anhand von Gebäudestruktur, Gebäudenutzungsintensität, -art und/oder-zustand ermittelt werden. Es kann auch auf eine anhand von Gebäudestruktur, Gebäudenutzungsintensität, -art und/oderzustand ermittelte Jahresdurchschnittsinnentemperatur Bezug genommen werden.

Zum Beispiel kann das betreffende Gebäude nach den jeweiligen Raumsolltemperaturen zoniert und entsprechend der Raumvolumina der Zonen, der Lage der Zonen im Gebäude die Jahresdurchschnittstemperatur ermittelt werden. Durch eine Kurzzeitmessung, z.B. 24 h kann der Wert für die Nutzenergie für die Trinkwassererwärmung ermittelt und in Abhängigkeit von der Nutzungsform auf das Jahr extrapoliert werden.

Die Durchschnitts- oder Minimalaußentemperaturen können aus Messungen stammen oder anhand von Messungen unter Berücksichtigung weiterer Witterungsfaktoren wie Sonneneinstrahlung, Windgeschwindigkeit, Luftfeuchte und/oder Niederschlagsmenge ermittelt sein.

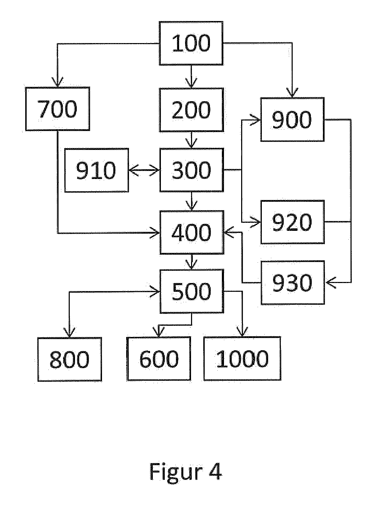

In Figur 4 ist ein Flussdiagramm eines Verfahrens zur Ermittlung eines Jahresnutzungsgrades eines Gebäudes gezeigt.

In einem ersten Schritt 100 wird eine Datenaufnahme, z.B. durch eine Begehung durchgeführt. Die aufgenommen Daten dienen dabei der Festlegung der Berechnungsgrundlage und der Berechnungsalgorithmen für die Ermittlung von Nutzenergiemengen. Ergebnis der Begehung 100 ist ein Datenblatt 700. Die Ergebnisse können auch zur Kalibrierung eines oder mehrerer Messsystem beispielsweise eines mobilen Messsystems 900 und/oder eines stationären Messsystems 920, verwendet werden.

Im folgenden Schritt 200 wird eine Ermittlung einer in einem Ermittlungszeitraum verbrauchten Endenergiemenge und einer entsprechenden Nutzenergiemenge der Anlage unter den augenblicklichen Randbedingungen durchgeführt. Dies betrifft insbesondere die augenblicklichen Witterungsbedingungen, wie etwa eine augenblickliche Außentemperatur, die von vielen Anlagen für die Regelung gemessen und direkt berücksichtigt werden aber auch in Anlagen ohne solche direkte Berücksichtigung indirekt in die Regelung einfließen.

Daran anschließend folgt ein Schritt 300, in dem eine Manipulation der Anlage für einen Manipulationszeitraum vorgenommen wird. Ziel der Manipulation ist ein Betrieb der Anlage unter anderen, von den augenblicklichen Randbedingungen abweichenden Randbedingungen bezüglich des Endenergieverbrauchs, etwa sehr niedriger Verbrauch, der beispielsweise bei ausschließlicher Warmwassererzeugung auftritt, und sehr hoher Verbrauch, der beispielsweise durch eine extrem niedrige Außentemperatur bestimmt ist

Verfügt die Anlage beispielsweise über eine Außentemperaturmessvorrichtung und wird die verbrauchte Endenergiemenge außentemperaturabhängig geregelt, so kann durch Manipulation der Außentemperaturmessvorrichtung, beispielsweise Kühlen oder Wärmen eines Temperaturfühlers, des gemessenen Außentemperaturwertes oder der Regelungsantwort auf den gemessenen Außentemperaturwert der andere, unterschiedliche Verbrauch von End- oder Endenergie bewirkt werden.

In Schritt 300 werden zu den anderen Verbrauchsmengen der Endenergie in weiteren Ermittlungszeiträumen entsprechende Nutzenergiemengen ermittelt. Dafür wird beispielsweise mit einem Steuerteil 910 für ein Außentemperatursignal kommuniziert, welches den Verbrauch der anderen Verbrauchsmengen der Endenergie, durch Manipulation des Außentemperatursignals und/oder der zugehörigen Regelungsantwort bewirkt.

Eine Messwertedatei 930 kann anschließend, zusammen mit dem Datenblatt 700 oder alleine, für einen Plausibilitätscheck in einem optionalen Schritt 400 verwendet werden. Der Schritt 400 kann voll automatisiert ablaufen. Daran anschließend kann in Schritt 500 eine interaktive Expertenanalyse folgen, die teilautomatisiert ablaufen kann und mit einer Wissensdatenbank 800 interagiert und einen Nutzungsgrad 1000 für einen vorgegebenen Zeitraum ermittelt.

Zusätzlich können in Schritt 600 potenzielle Regelungs- und Messfehler sowie Einsparpotenziale identifiziert werden und Empfehlungen für die Anlage abgeleitet werden.

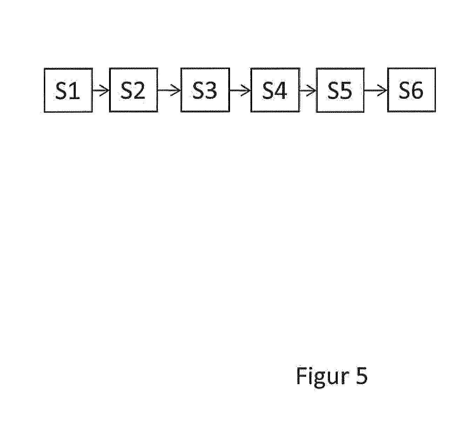

In einem Ausführungsbeispiel der Erfindung, welches beispielhaft und schematisch in Figur 5 dargestellt ist, werden zur Ermittlung des Jahresnutzungsgrades folgende Schritte durchgeführt:

Es wird in Schritt S1 die Tages- bzw. Stundennutzenergiemenge im nicht manipulierten Zustand durch Tages- bzw. Stundenmessung oder Messung in einem kürzeren Zeitraum und Hochrechnung auf einen Tag bzw. eine Stunde ermittelt. Weiterhin wird in Schritt S2 die Tages- bzw. Stundennutzenergiemenge im manipulierten Zustand mit hohem Endenergieverbrauch, durch Tages- bzw. Stundenmessung oder Messung in einem kürzeren Zeitraum und Hochrechnung auf einen Tag bzw. eine Stunde ermittelt. Des Weiteren in Schritt S3 wird auch die Tages- bzw. Stundennutzenergiemenge im manipulierten Zustand mit niedrigem Endenergieverbrauch, durch Tages- bzw. Stundenmessung oder Messung in einem kürzeren Zeitraum und Hochrechnung auf einen Tag bzw. eine Stunde ermittelt. Zudem werden in Schritt S4 an den einzelnen Tagen bzw. in den einzelnen Stunden des Jahres aufgewandte Endenergiemengen ermittelt. Daraus werden entsprechende in Schritt S5 weitere Tages- bzw. Stundennutzenergiemengen durch Extrapolation oder Interpolation anhand der ermittelten Endenergiemengen ermittelt. Schließlich wird in Schritt S6 der Jahresnutzungsgrad anhand einer Summe der ermittelten Endenergiemengen und einer Summe der ermittelten entsprechenden weiteren Tages- bzw. Stundennutzenergiemengen ermittelt.

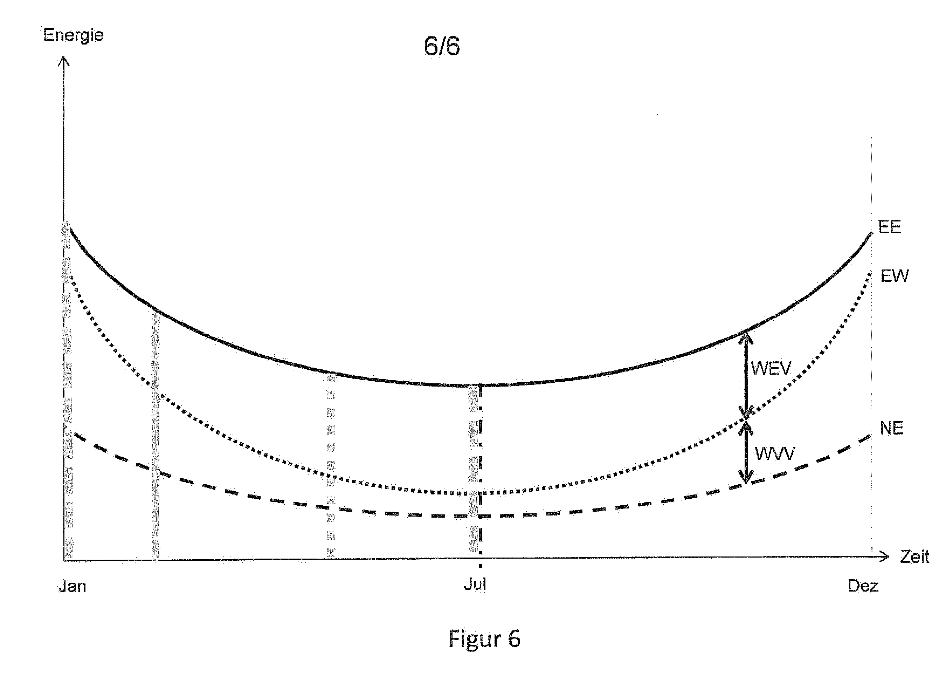

Figur 6 zeigt beispielhaft Verlauf von Tages- bzw. Stundennutzungsgrad und End-, Verlust und Nutzenergieverbrauch über das Jahr.

Zum Beispiel erfolgt aus den jeweiligen Werten für die verschiedenen Lastzustände eine Hochrechnung auf das gesamte Bezugsjahr unter Berücksichtigung der Nutzungsform, Nutzungszustände, Jahreswetterverlauf mit Außentemperatur, Solarstrahlung, Windgeschwindigkeit, Luftfeuchte, Niederschlagsmenge.

Die Figur zeigt einen Verlauf der Endenergie EE (durchgezogene Kurve), einen Verlauf der Nutzenergie NE (gestrichelte Kurve), und einen Verlauf der erzeugten Wärme EW (gepunktete Kurve). Die über das Jahr variierende Differenz zwischen Endenergie EE und erzeugter Wärme EW entspricht dem Verlauf der Wärmeerzeugungsverluste WEV. Die über das Jahr variierende Differenz zwischen erzeugter Wärme EW und Nutzenergie NE entspricht dem Verlauf der Wärmeverteilungsverluste WVV.

Werte für Endenergie EE, erzeugte Wärme EW und Nutzenergie NE für Tage mit Extremlasten, wie sie beispielsweise als Tage mit Starklast im Januar oder als Tage mit Schwachlast im Juli vorliegen können, werden extrapoliert, dies ist durch die grau gestrichelten senkrechten Striche angedeutet. Werte für Endenergie EE, erzeugte Wärme EW und Nutzenergie NE am Tag der Messung an der unmanipulierten Anlage werden entsprechend dieser Messung bestimmt, dies ist durch den grauen durchgehenden senkrechten Strich angedeutet. Werte für Endenergie EE, erzeugte Wärme EW und Nutzenergie NE an allen anderen Tagen werden interpoliert, dies ist durch den grauen gepunkteten senkrechten Strich angedeutet.

Die vorliegende Erfindung ermöglicht, in einer Kurzzeitmessung in Kombination mit einer Manipulation der Anlage die wesentlichen lastabhängigen Betriebszustände der Anlage zu erfassen. Diese können die Zustände auf Starklast (z.B., bei der Beheizung eines Gebäudes, hoher Anteil von Raumheizung), Normallast (z.B. mittlerer Anteil der Raumheizung) und Schwachlast (z.B. geringer Anteil von Raumheizung) reduziert werden.

Um diese Zustände in einer Kurzzeitmessung bei relativ konstanter Außentemperatur oder/und relativ konstantem Nutzerverhalten messtechnisch erfassen zu können, wird ein entsprechender Eingriff in die Regelung der Anlage vorgeschlagen.

Der vorgeschlagene Eingriff kann durch eine für den Zeitraum der Messung zu installierende Vorrichtung durchgeführt werden und kann ggf. auch manuell realisiert werden.

Dabei erfolgt der Eingriff derart, dass z.B. das Signal für die Wärmeanforderung Raumheizung zeitweilig auf einen Zustand eines geringen Bedarfs für Raumheizung manipuliert wird.

Ein Ausführungsbeispiel der vorliegenden Erfindung basiert auf einer Lastmanipulation. Dies kann z.B. durch eine zeitweilige Manipulation des Außenfühlers erfolgen. Dieser simulierte Bedarf entspricht dann einer hohen Außentemperatur, z.B. dem Überschreiten der Heizgrenze oder einer Nachtabschaltung. Analog kann auch in die Regelung für die Trinkwassererwärmung, Produktionswärme oder Kälteerzeugung bzw. -Verteilung eingegriffen werden.

In einem Ausführungsbeispiel der vorliegenden Erfindung kann eine Jahresdurchschnittstemperatur innerhalb des Gebäudes berücksichtigt werden. Dazu wird beispielsweise das betreffende Gebäude nach den jeweiligen Raumtemperaturen zoniert und entsprechend der Raumvolumen der Zonen, der Lage der Zonen im Gebäude die Jahresdurchschnittstemperatur zu bestimmt.

In einem Ausführungsbeispiel der vorliegenden Erfindung kann eine Extrapolation bzw. Interpolation aus dem Zyklus der Kurzzeitmessung auf das Bezugsjahr erfolgen. Beispielsweise werden der Ermittlung der Verluste wird ein für den Standort des Gebäudes und das Bezugsjahr ermittelter Wetterverlauf, sowie die jeweilige Anlagenkonfiguration und deren messwertbasierte Bewertung ihres Betriebsverhaltens zugrunde gelegt. Entsprechend der messtechnisch ermittelten Werte für die teilweise manipulierten Zustände Schwachlast, Mittellast und Starklast werden durch Interpolation Zwischenwerte und die Werte für die Extremlasten im Auslegungsfall durch Extrapolation ermittelt. Damit wird nach Bild Verlauf Jahresverluste jedem Tag im Jahresverlauf ein mittlerer Verlust und ein mittlerer Verbrauch zugeordnet.

Aus den jeweiligen Werten für die verschiedenen Lastzustände erfolgt die Hochrechnung auf das gesamte Bezugsjahr unter Berücksichtigung der Nutzungsform, Nutzungszustände, Jahreswetterverlauf mit Außentemperatur, Solarstrahlung, Windgeschwindigkeit, Luftfeuchte, Niederschlagsmenge. Wenn der Jahresverbrauch einer Anlage bekannt ist, dann kann dieser Wert zur Validierung eingesetzt werden, ebenfalls Werte aus eventuell vorhandenen Wärmemengenzählern, Kaltwasserzählern und Strommengenzählern. Das Mess- und Manipulationsverfahren besteht damit z.B. für eine brennstoffbefeuerte Anlage mit Heizkessel aus folgenden Bestandteilen:

Eine beispielhafte Anlage, an der die Erfindung ausgeführt werden kann, ist eine Heizanlage. die aus Modulen zur Wärmeerzeugung, bzw. Wärmeübertragung, Wärmeverteilung, Wärmespeicherung und Wärmeübergabe besteht. Anlog kann die Erfindung für Kühlanlagen oder kombinierte Heiz- und Kühlsysteme verwendet werden.

Für die jeweiligen außentemperaturabhängigen Werte im Bereich zwischen Heizgrenztemperatur und Auslegungstemperatur kann der Wert der erforderlichen Nutzenergie beispielsweise entsprechend der Anlagenkennlinie ermittelt werden. Auch hier können die Nutzungszyklen der Gebäude mit den jeweiligen außentemperaturabhängigen erforderlichen Nutzungszuständen, z.B. Leerstandsraten und Nutzungszyklen verknüpft werden.

In einem Ausführungsbeispiel der erfindungsgemäßen Vorrichtung umfasst diese einen Manipulator für die stunden- oder tageweise Manipulation des Lastzustandes, adaptiert auf eine konkrete Regeleinrichtung und Anlagenkonfiguration. Die Vorrichtung kann weiterhin Mittel zur Ermittlung der Jahresdurchschnittsinnentemperatur für den Bezugszeitraum, adaptiert auf konkret vorgefundene Datenlage für Gebäude, Nutzungsart, Nutzungszustände im Bezugszeitraum umfassen. Die Vorrichtung kann auch Mittel zur Ermittlung des Jahreswetterverlaufs für den Bezugszeitraum und Standort des Gebäudes umfassen.

Schließlich kann die Vorrichtung Mittel zur Validierung anhand von Daten vorhandener Messeinrichtungen oder vorheriger Messungen umfassen.

## Patentansprüche

1. Verfahren zur Ermittlung eines Energienutzungsgrades einer energetischen Anlage eines Gebäudes, wobei das Verfahren den Energienutzungsgrad für einen definierten Zeitraum ermittelt und folgenden Schritt umfasst:
Ermitteln (S6) des Energienutzungsgrades als Verhältnis einer Summe von Nutzenergieteilmengen für Teilzeiträume, die sich zu dem definierten Zeitraum aufaddieren, zu einer Gesamtendenergiemenge des definierten Zeitraums,
**dadurch gekennzeichnet, dass**
zumindest die Nutzenergieteilmengen ermittelt werden durch:
Ermitteln (S1) eines mittleren Wertes pro Zeiteinheit mindestens einer Größe, wobei mittels des Wertes eine aktuell aufgewendete Endenergiemenge ermittelbar ist, und
eines zugeordneten Wertes pro Zeiteinheit einer weiteren Größe, die abhängig von einer Konstellation und einem aktuellen Betriebsverhalten der Anlage ist, wobei mittels des zugeordneten Wertes eine an einem Übergabepunkt verfügbargemachte Nutzenergiemenge ermittelbar ist;
temporäres Manipulieren der Anlage, so dass die Anlage unter Verwendung von anderen Mengen von Endenergie betrieben wird, wobei von den anderen Mengen mindestens eine größer und mindestens eine kleiner als die aktuell aufgewendete Endenergiemenge ist, und Ermitteln (S2, S3) jeweils zugehöriger Werte pro Zeiteinheit der weiteren Größe der manipulierten Anlage,
Zuordnung der Werte der weiteren Größe der manipulierten Anlage zu weiteren Werten der mindestens einen Größe, und
Ermitteln (S5) der Nutzenergieteilmengen entsprechend vorbestimmter Werte der mindestens einen Größe für die Teilzeiträume durch Inter- oder Extrapolation der ermittelten Werte der weiteren Größe.

2. Verfahren nach Anspruch 1, wobei die weitere Größe eine Nutzenergiemenge, ein Nutzungsgrad oder eine Verlustenergiemenge ist.

3. Verfahren nach Anspruch 1 oder 2, wobei die Gesamtendenergiemenge eine Summe von Endenergieteilmengen ist.

4. Verfahren nach Anspruch 3, wobei die Endenergieteilmengen entsprechend den vorbestimmten Werten der mindestens einen Größe ermittelt sind.

5. Verfahren nach einem der Ansprüche 1-4, wobei die mindestens eine Größe eine Außentemperatur ist und die weiteren Werte der mindestens einen Größe eine Temperaturuntergrenze und eine Temperaturobergrenze der Anlage sind, wobei die Anlage einen Außentemperaturmessvorrichtung umfasst und die Temperatur abhängig von einem gemessenen Außentemperaturwert regelt und die Manipulation der Anlage die Außentemperaturmessvorrichtung, einen gemessenen Außentemperaturwert und/oder eine Regelungsantwort auf den gemessenen Außentemperaturwert betrifft.

6. Verfahren nach einem der Ansprüche 1-4, wobei die mindestens eine Größe eine Last ist und die vorbestimmter Werte Lastzustände sind zu deren Ermittlung Daten zu mindestens einer der folgenden Größen verwendet werden: Raumvolumina, Sollinnentemperaturwerte, Lagen und Nutzungsformen von Räumen des Gebäudes, Gebäudestandort, Außentemperatur, Solareinstrahlung, Windgeschwindigkeit, Luftfeuchte und Niederschlagsmenge.

7. Verfahren nach einem der Ansprüche 1-6, wobei die Werte der weiteren Größe in einem anderen Zeitraum ermittelt werden, der kürzer als der Zeitraum ist.

8. Vorrichtung zur Ermittlung eines Energienutzungsgrades einer Anlage, wobei die Vorrichtung den Energienutzungsgrad für einen definierten Zeitraum ermittelt und umfasst:
Mittel zum Bestimmen des Energienutzungsgrades als Verhältnis einer Summe von Nutzenergieteilmengen für Teilzeiträume des Zeitraums zu einer Gesamtendenergiemenge des definierten Zeitraums,
**dadurch gekennzeichnet, dass** die Vorrichtung weiterhin Mittel zum Ermitteln der Nutzenergieteilmengen umfasst, umfassend:
Mittel zum Ermitteln von mittleren Werten pro Zeiteinheit mindestens einer Größe,
wobei mittels der Werte der Größe Endenergiemengen ermittelbar sind,
Mittel zum Ermitteln von Werten pro Zeiteinheit einer weiteren Größe, die abhängig von einer Konstellation und einem aktuellen Betriebsverhalten der Anlage ist, wobei mittels der Werte der weiteren Größe an einem Übergabepunkt verfügbargemachte Nutzenergiemengen ermittelbar sind;
Mittel zur temporären Manipulation der Anlage, so dass die Anlage unter Verwendung von anderen Mengen von Endenergie betrieben wird, wobei von den anderen Mengen mindestens eine größer und mindestens eine kleiner als die aktuell aufgewendete Endenergiemenge ist,
Mittel zur Zuordnung der ermittelten Werte der weiteren Größe jeweils zu einem ermittelten oder vorbestimmten Wert der mindestens einen Größe, und
Mittel zum Ermitteln der Nutzenergieteilmengen entsprechend vorbestimmter Werte der mindestens einen Größe für die Teilzeiträume durch Inter- oder Extrapolation der ermittelten Werte der weiteren Größe.

9. Vorrichtung nach Anspruch 8, wobei die weitere Größe eine Nutzenergiemenge, ein Nutzungsgrad oder eine Verlustenergiemenge ist.

10. Verfahren nach Anspruch 8 oder 9, wobei die Gesamtendenergiemenge ermittelt wird durch: Aufsummieren von Endenergieteilmengen, die entsprechend den vorbestimmten Werten der mindestens einen Größe ermittelt sind.

11. Vorrichtung nach einem der Ansprüche 8-10, wobei die mindestens eine Größe eine Außentemperatur ist, die anderen Werte der mindestens einen Größe eine Temperaturuntergrenze und eine Temperaturobergrenze der Anlage und die vorbestimmten Werte Außentemperaturdaten für die Teilzeiträume sind, wobei die Anlage einen Außentemperaturmessvorrichtung umfasst und eine Innentemperatur des Gebäudes abhängig von einem gemessenen Außentemperaturwert regelt und die Manipulation die Außentemperaturmessvorrichtung, den gemessenen Außentemperaturwert und/oder eine Regelungsantwort auf den gemessenen Außentemperaturwert betrifft.

12. Vorrichtung nach einem der Ansprüche 8-10, wobei die mindestens eine Größe eine Last ist und die vorbestimmten Werte Lastzustände sind, zu deren Ermittlung Daten zu mindestens einer der folgenden Größen verwendet werden: Raumvolumina, Sollinnentemperaturwerte, Lagen und Nutzungsformen von Räumen des Gebäudes, Gebäudestandort, Außentemperatur, Solareinstrahlung, Windgeschwindigkeit, Luftfeuchte und Niederschlagsmenge.

13. Vorrichtung nach einem der Ansprüche 8-12, wobei die Vorrichtung derart ausgelegt ist, dass sie die Werte der weiteren Größe in einem anderen Zeitraum ermittelt, der kürzer als der Zeitraum ist.
